# EUROPÄISCHE PATENTSCHRIFT

(11) **EP 1 501 706 B1**
(45) Veröffentlichungstag und Bekanntmachung des Hinweises auf die Patenterteilung: **02.11.2005**
(21) Anmeldenummer: 03729870.0
(22) Anmeldetag: 30.04.2003
(51) Int. Cl.: B60R 21/20

(54) **AIRBAGMODUL FÜR EIN KRAFTFAHRZEUG**
AIRBAG MODULE FOR A MOTOR VEHICLE
MODULE SAC GONFLABLE D'UN VEHICULE AUTOMOBILE

(30) Priorität: 03.05.2002 DE 10221101
(43) Veröffentlichungstag der Anmeldung: 02.02.2005
(73) Patentinhaber: Takata-Petri AG, 63743 Aschaffenburg (DE)
(72) Erfinder: CROHN, Detlef, 13156 Berlin (DE); KEMPE, Christian, 63741 Aschaffenburg (DE); MAROTZKE, Thomas, 16562 Bergfelde (DE)
(74) Vertreter: Baumgärtel, Gunnar
(86) Internationale Anmeldenummer: PCT/DE2003/001470
(87) Internationale Veröffentlichungsnummer: WO 2003/093070

(56) Entgegenhaltungen:
- EP-A- 0 668 196
- EP-A- 0 822 124
- EP-A- 0 957 009
- EP-A- 1 112 902
- WO-A-96/15923
- DE-A- 2 524 770
- DE-U- 20 019 636
- DE-U- 29 917 645
- US-A- 5 505 488
- US-A- 5 558 362
- US-A- 5 762 360

## Beschreibung

Die Erfindung betrifft ein Airbagmodul für ein Kraftfahrzeug nach dem Oberbegriff des Patentanspruchs 1.

Ein derartiges Airbagmodul umfasst einen Gassack, einen Gasgenerator zum Aufblasen des Gassackes in einem Crash-Fall zum Schutz eines Fahrzeuginsassen sowie ein Modulgehäuse zur Aufnahme des Gasgenerators und des Gassackes.

Aus der gattungsbildenden US 5,762,360 ist ein Airbagmodul für ein Kraftfahrzeug bekannt, das neben einem Gassack und einem Gasgenerator eine grundplatte mit einer Abdeckung aufweist. Gassack und Gasgenerator sind dabei auf verschiedenen Seiten der Grundplatte angeordnet.

Der Erfindung liegt das Problem zugrunde, ein Airbagmodul der eingangs genannten Art zu schaffen, das eine möglichst variable Anordnung des Gasgenerators einerseits und des Gassackes andererseits zulässt.

Dieses Problem wird erfindungsgemäß durch die Schaffung eines Airbagmoduls mit den Merkmalen des Patentanspruchs 1 gelöst.

Danach sind der Gasgenerator einerseits und der Gassack andererseits auf einander gegenüberliegenden Seiten einer (großflächigen) Wand des Gehäuses angeordnet. Auf der zur Aufnahme des Gassackes dienenden Seite der Gehäusewand ist ein Diffusor angeordnet, durch den hindurch aus dem Gasgenerator ausströmendes Gas in definierter Weise in den aufzublasenden Gassack eingeleitet wird, mit dem Ziel einer Steuerung der Gasstromrichtung. Der Diffusor selbst ist über einer Öffnung in der Gehäusewand ausgebildet, durch die hindurch aus dem Gasgenerator ausströmendes Gas in den Diffusor gelangen kann.

Die erfindungsgemäße Lösung hat den Vorteil, dass durch die Anordnung des Gasgenerators und des Gassackes auf zwei unterschiedlichen Seiten einer Gehäusewand diese beiden Baugruppen einerseits dicht bei einander angeordnet sind, so dass aus dem Gasgenerator strömendes Gas in einfacher Weise in den aufzublasenden Gassack eingeleitet werden kann, und dass andererseits die Form, Größe und Positionierung von Gasgenerator bzw. Gassack völlig unabhängig von der jeweils anderen der beiden Baugruppen ist. So kann auf der einen Seite der Wand ein beliebig gestaltetes, gerafftes und/oder gefaltetes Gassackpaket angeordnet werden, ohne dass auf die Geometrie, Größe oder Positionierung des Gasgenerators auf der anderen Seite der Wand Rücksicht genommen werden müsste. Umgekehrt ist auch die Größe, Form und Positionierung des Gasgenerators auf der anderen Seite der Wand weitgehend unabhängig von der Form und Größe des Gassackpaketes auf der gegenüberliegenden Seite der Wand. Es muss lediglich sichergestellt sein, dass der Gasaustrittsbereich des Gasgenerators mit dem Einblasmund des aufzublasenden Gassackes so zusammenwirkt, dass aus dem Gasaustrittsbereich des Gasgenerators strömendes Gas in den aufzublasenden Gassack eingeleitet werden kann.

In einer besonders bevorzugten Ausführungsform der Erfindung ist auf der Seite der Gehäusewand, auf der der Gassack angeordnet ist, eine Halteplatte befestigt, die auf der Gehäusewand aufliegt, wobei der Gassack zwischen der Halteplatte und der Gehäusewand eingeklemmt ist. Die Halteplatte kann insbesondere als ein Halteblech ausgebildet und der Gassack am Rand seines Einblasmundes zwischen dem Halteblech und der Gehäusewand eingespannt sein.

Dieser Diffusor kann in einfacher Weise einstückig an der Halteplatte (z.B. einem Halteblech) angeformt sein.

In einer bevorzugten Weiterbildung der Erfindung ist der Gassack derart gefaltet, dass sich oberhalb einer in Strömungsrichtung des Gases oberen Deckfläche des Diffusors nur eine Lage des Gassackes erstreckt.

Die Halteplatte insgesamt kann in einfacher Weise mittels Schrauben oder Rastelementen an der Gehäusewand befestigt sein und weist in einer bevorzugten Ausführungsform weiterhin eine einstückige Ausformung, z. B. eine Sicke auf, die eine Öffnung in der Gehäusewand durchgreift und zur Lagefixierung des Gasgenerators dient.

Ferner können die Halteplatte einerseits und die Gehäusewand andererseits miteinander korrespondierende Öffnungen zur Bildung einer Abströmöffnung aufweisen, durch die hindurch aus einer Entlüftungsöffnung oder einem gasdurchlässigen Gewebe des Gassackes entwichenes Gas abgeleitet werden kann.

Auf der anderen, dem Gasgenerator zugeordneten Seite der Gehäusewand ist in einer vorteilhaften Ausführungsform der Erfindung eine von der Wand abstehende Halterung für den Gasgenerator angeformt. Der Gasgenerator kann insbesondere als ein Rohrgasgenerator ausgebildet sein, der mit einem axialen Ende, z. B. mittels einer Schraube oder mittels Rastelementen, an der Halterung befestigt ist.

Die Halterung ist derart ausgebildet, dass sie zusammen mit dem Gehäuse des Gasgenerators den Gasaustrittsbereich des Gasgenerators zur Bildung eines nach außen hin gasdichten Hohlraumes umschließt, der lediglich einen Durchgang aufweist, durch den hindurch Gas in den aufzublasenden Gassack strömen kann. Unter dem Gasaustrittsbereich des Gasgenerators wird dabei derjenige Abschnitt verstanden, an dem sich die Ausströmöffnungen befinden, durch die hindurch Gas aus dem Gasgenerator strömen kann.

Dieser Gasaustrittsbereich kann insbesondere an einem axialen Endabschnitt des Gasgenerators vorgesehen sein, wobei der Hohlraum nur diesen mit dem Gasaustrittsbereich versehenen Endabschnitt des Gasgenerators umgibt. Hierdurch kann das aus dem Gasgenerator ausströmende Gas auf kurzem Wege und ohne mehrfache Umlenkung kontrolliert in den aufzublasenden Gassack geleitet werden. Ferner werden die Bauteilbelastungen minimiert.

An der Gehäusewand kann zudem mindestens eine weitere Halterung für den Gasgenerator angeformt sein, um eine zusätzliche Befestigung bzw. Abstützung des Gasgenerators zu gewährleisten.

Die erfindungsgemäße Lösung ermöglicht insbesondere, dass die räumliche Ausdehnung des auf der einen Seite der Gehäusewand angeordneten Gassackpaketes entlang der durch die Gehäusewand definierten Ebene sowie dessen räumliche Lage von der entsprechenden Ausdehnung und Lage des Gasgenerators stark abweichen kann. Insbesondere kann die Ausdehnung der Aufnahme für den Gassack erheblich größer als die Ausdehnung des Gasgenerators in der einen oder anderen Raumrichtung sein, wenn eine möglichst flache Faltung des Gassackes mit einem entsprechenden Platzbedarf in der Erstreckungsebene des Gassackes vorgesehen ist.

Weitere Merkmale und- Vorteile der Erfindung werden bei der nachfolgenden Beschreibung eines Ausführungsbeispieles anhand der Figuren deutlich werden.

Es zeigen:
- Fig. 1: einen Längsschnitt durch ein Airbagmodul mit einem Gassack, einem Gasgenerator zum Aufblasen des Gassackes sowie einem Modulgehäuse;
- Fig. 2: eine Draufsicht auf das Airbagmodul aus Figur 1 ohne Gassack;
- Fig. 3: einen Querschnitt durch das Airbagmodul aus Figur 1.

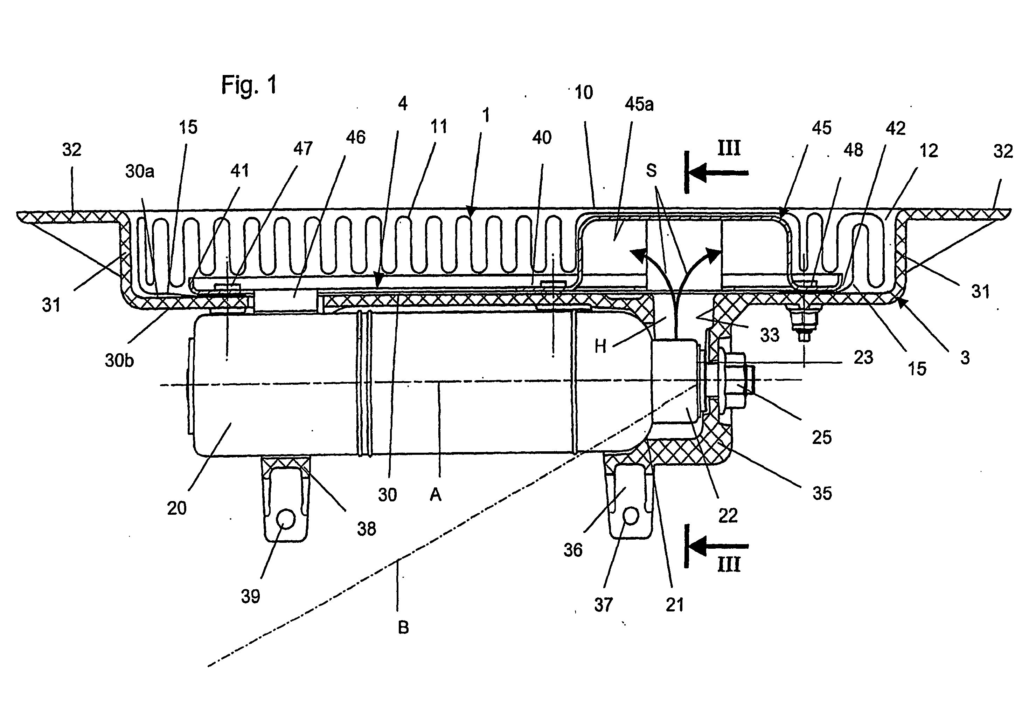

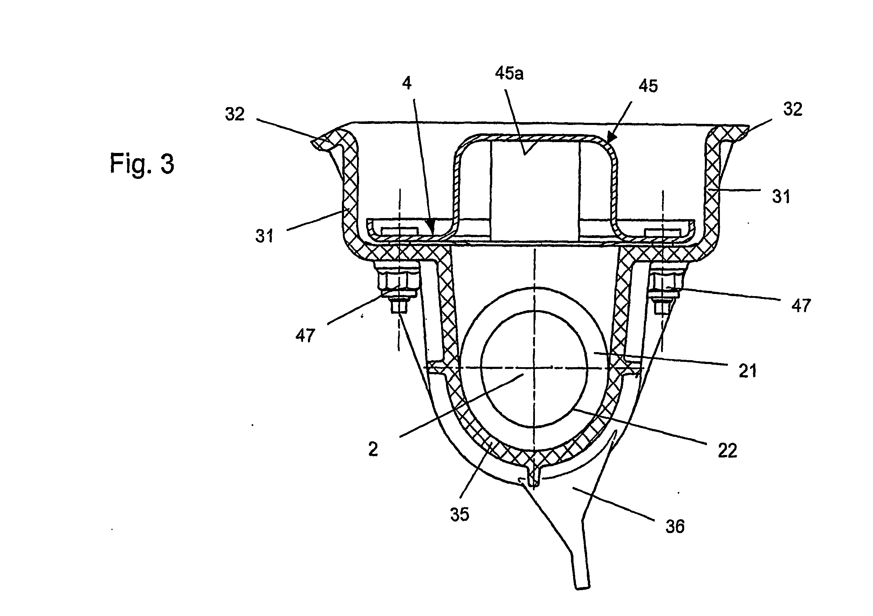

In den Figuren 1 bis 3 sind drei Baugruppen eines Airbagmoduls für ein Kraftfahrzeug dargestellt, nämlich ein zum Schutz eines Fahrzeuginsassen aufblasbarer Gassack 1, ein Gasgenerator 2 zum Aufblasen des Gassackes 1 sowie ein zur Aufnahme des Gassackes 1 sowie des Gasgenerators 2 vorgesehenes Gehäuse 3. Bei dem Airbagmodul handelt es sich um ein Beifahrer-Modul, das zum Schutz des Beifahrers eines Kraftfahrzeugs in einem Crash-Fall an der Armaturentafel eines Kraftfahrzeugs montierbar ist. Der Gassack 1 sowie der Gasgenerator 2 sind auf einander gegenüberliegenden Seiten 30a bzw. 30b einer eine Basisfläche bildendenden, großflächigen Wand 30 des Gehäuses 3 angeordnet.

An der zur Aufnahme des Gassackes 1 dienenden Seite 30a der Wand 30 (Vorderseite) ist eine umlaufende seitliche Begrenzungswand 31 angeformt, die zusammen mit der die Basisfläche bildenden Gehäusewand 30 eine Aufnahme für den zu einem Paket zusammengefalteten Gassack 1 bildet. Von der entlang des Randes der Gehäusewand 30 umlaufenden seitlichen Begrenzungswand 31 steht senkrecht ein mit Befestigungsöffnungen 300 zur Befestigung des Modulgehäuses 3 an der Armaturentafel versehener Abschnitt 32 ab.

Auf der gegenüberliegenden Seite 30b (Rückseite) der eine Basisfläche bildenden Gehäusewand 30 ist eine erste Halterung 35 zur Aufnahme eines axialen Endabschnittes des als Rohrgasgenerator ausgebildeten Gasgenerators 2 vorgesehen. Eine weitere auf Rückseite der Gehäusewand 30 angeformte Halterung 38 dient zur Befestigung und Abstützung des Gasgenerators 2 an seinem anderen axialen Ende.

Das vorstehend beschriebene Gehäuse 3 besteht vorzugsweise aus Kunststoff, wodurch bei geringem Gewicht und geringem Wärmeaufnahmevermögen des Gehäuses 3 eine große Formenvielfalt möglicher Gehäusetypen ermöglicht wird. Der Vorteil des geringen Gewichtes lässt sich auch bei einem aus Leichtmetall bestehenden Gehäuses erreichen.

Auf der zur Aufnahme des Gassackes 1 dienenden Vorderseite 30a der Gehäusewand 30 liegt eine Halteplatte in Form eines Haltebleches 4 mit einem großflächigen Grundkörper 40 auf und ist mittels Befestigungsschrauben 47, 48 an der Gehäusewand 30 befestigt. Das Halteblech 4 dient zur Einspannung des Gassackes 1, indem der Rand 15 des Einblasmundes des Gassackes 1 zwischen dem Rand des Grundkörpers 40 des Haltebleches 4 (benachbart zu den umgelegten seitlichen Endabschnitten 41, 42) und der Vorderseite 30a der Gehäusewand 30 eingeklemmt ist.

Darüber hinaus ist an dem Halteblech 4 einstückig ein Diffusor 45 angeformt, der zur Steuerung des aus dem Gasgenerator austretenden Gasstromes sowie zu dessen gezielter Einleitung in den aufzublasenden Gassack 1 dient. Weiterhin ist am Halteblech 4 einstückig eine Sicke 46 zur spielfreien Lagesicherung des Gasgenerators 2 angeformt, die eine Öffnung in der Gehäusewand 30 durchgreift und an dem Gehäuse 20 des Gasgenerators 2 anliegt.

Der Gassack 1 ist oberhalb der Vorderseite 30a der Gehäusewand 30 sowie umschlossen von der seitlichen Begrenzungswand 31 des Gehäuses 3 zu einem Gassackpaket zusammengefaltet, dessen Falten - entlang der Längsachse A des Rohrgasgenerators 2 betrachtet - neben dem Diffusor 45 angeordnet sind und diesen umgeben. Unterschiedliche Bereiche 11, 12 des Gassackpaketes sind durch eine einzelne Lage 10 des Gassackes miteinander verbunden, die sich auf der oberen Deckfläche 45a des Diffusors 45 erstreckt.

Dadurch, dass der Gassack 1 als Paket in einer Aufnahme des Modulgehäuses 3 verstaut ist, die ausschließlich zur Aufnahme des Gassackes 1, nicht aber zur Aufnahme des Gasgenerators 2 dient, kann das Gassackpaket unabhängig von der Größe und Geometrie des Gasgenerators, eine beliebige Form aufweisen. Vorliegend ist der Gassack 1 zu einem sehr flachen Paket zusammengefaltet, mit einer geringen Höhe senkrecht zur Erstreckungsebene der Gehäusewand 30. Im Gegenzug weist das Gassackpaket in der Erstreckungsebene der Gehäusewand 30, sowohl parallel zur Längsachse A des Gasgenerators 2 als auch senkrecht hierzu, eine vergleichsweise große Ausdehnung auf. Insbesondere ist anhand Figur 1 erkennbar, dass die Ausdehnung des zu einem Paket zusammengefalteten Gassackes 1 entlang der Längsachse A des Gasgenerators 2 wesentlich größer ist als die Ausdehnung des Gasgenerators 2 selbst.

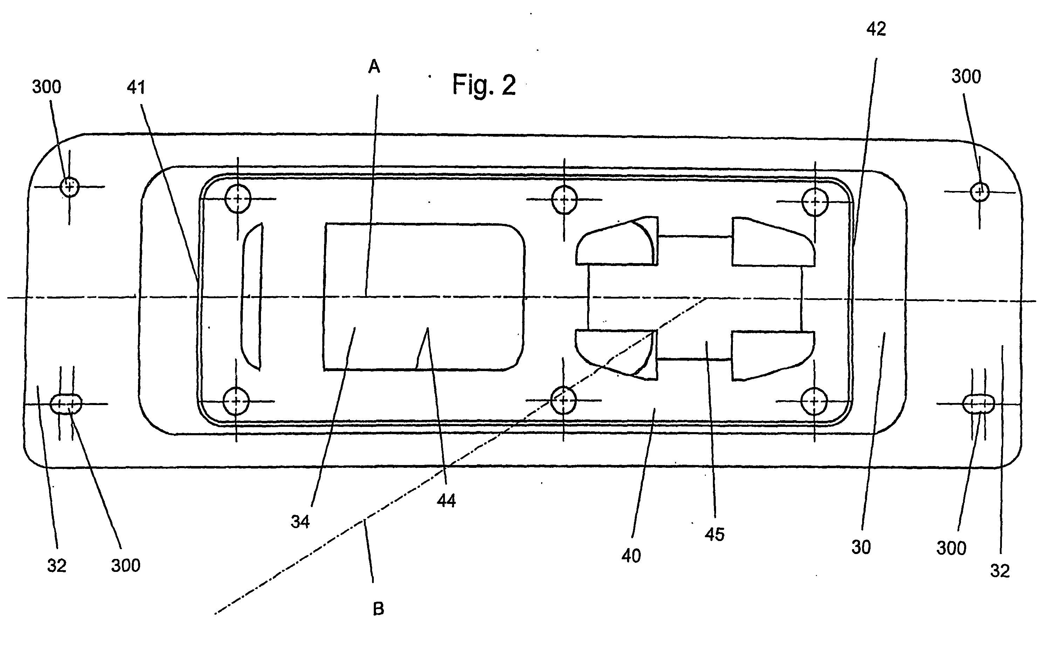

Unterhalb des einen gefalteten Abschnittes 11 des Gassackes 1 sind in dem Grundkörper 40 des Haltebleches 4 sowie in der Gehäusewand 30 miteinander korrespondierende Öffnungen 34, 44 (vergleiche Figur 2; die Öffnung 34 ist in Fig. 1 nicht dargestellt) vorgesehen, die gemeinsam eine Abströmöffnung für solches Gas bilden, das durch eine Entlüftungsöffnung des aufzublasenden Gassackes hindurch aus diesem entwichen ist. Diese stets geöffnete Abströmöffnung 34, 44 ermöglicht es, aus dem aufgeblasenen Gassack entwichene heiße Gase und Partikel hinter die Instrumententafel eines Kraftfahrzeugs abzuleiten und dadurch von den Insassen des Fahrzeugs femzuhalten. Dabei können in einer Ausführungsform der Einblasmund und die Entlüftungsöffnung des Gassackes zu einer einzigen Öffnung zusammengefasst sein, die mit den zugeordneten Öffnungen 33 und 34, 44 in der Gehäusewand 3 und dem Halteblech 4 kommuniziert.

Der von einem Gehäuse 20 umschlossene Gasgenerator 2 ist an der Rückseite 30b der Gehäusewand 30 angeordnet, und zwar mit einem axialen Ende 23, versehen mit einem Gewindezapfen, mittels einer Mutter 25 an der ersten an der Gehäusewand 30 angeformten Halterung 35 befestigt und mit seinem zweiten axialen Endabschnitt in einer zweiten an der Gehäusewand 30 angeformten Halterung 38 gehalten und abgestützt.

Der erste axiale Endabschnitt des Gasgenerators 2 bildet zugleich den mit Ausströmöffnungen versehenen Gasaustrittsbereich 22 des Gasgenerators, aus dem in dem Gasgenerator 2 gespeichertes und/oder mittels einer chemischen Reaktion erzeugtes Gas zum Aufblasen des Gassackes 1 austritt und der einen geringeren Durchmesser aufweist als die übrigen Bereiche des Gasgenerators 2.

Die erste Halterung 35 bildet zusammen mit einer Schulter 21 des Gasgenerators 2, die den Übergang zum Gasaustrittsbereich 22 des Gasgenerators 2 definiert, einen den Gasaustrittsbereich 22 umschließenden, nach außen hin abgedichteten Hohlraum H aus. Die erste Halterung 35 liegt hierzu dichtend an der Schulter 21 des Gasgenerators 2 an. Der Hohlraum H ist lediglich durch eine Öffnung 33 in der Gehäusewand 30 mit dem Innenraum des Diffusors 45 verbunden, so dass aus dem Gasaustrittsbereich 22 des Gasgenerators 2 ausströmendes Gas entlang seiner Strömungsrichtung S aus dem Hohlraum H durch die besagte Öffnung 33 hindurch in den Innenraum des Diffusors 45 gelangen kann, von wo aus das Gas mittels geeigneter Öffnungen in dem Diffusor 45 definiert in den aufzublasenden Gassack 1 eingeleitet wird.

Dadurch dass der mit dem Druck des aus dem Gasaustrittsbereich 22 des Gasgenerators 2 ausströmenden Gases beaufschlagte Hohlraum H lediglich den Gasaustrittsbereich 22, nicht aber weitere Abschnitte des Gasgenerators 2 umgibt, können die ausströmenden Gase auf kurzem Wege und ohne mehrfaches Umlenken kontrolliert in den Diffusor 45 und sodann in den aufzublasenden Gassack 1 eingeleitet werden. Ferner werden hierdurch die Bauteilbelastungen minimiert.

Sowohl an einem Fortsatz 36 der ersten Halterung 35 als auch an der zweiten Halterung 38 für den Gasgenerator 2 sind jeweils Durchgangsöffnungen 37, 39 in Form von Bohrungen zur Montage des Airbagmoduls am Fahrzeug, z. B. an einem Querträger, vorgesehen.

Durch die Anordnung des Gasgenerators 2 auf der dem Gassack 1 abgewandten Rückseite 30b der Gehäusewand 30 ist die Ausrichtung und Lage des Gasgenerators 2 unabhängig von der Form und Größe des Gassackpaketes. So kann der Gasgenerator 2 grundsätzlich mit einer beliebigen räumlichen Orientierung an der Rückseite 30b der Gehäusewand 30 angeordnet werden. Ein Beispiel für eine alternative räumliche Anordnung des Gasgenerators 2 ist in den Figuren 1 und 2 durch eine strichpunktierte Linie B angedeutet, die die Längsachse bei einer alternativen Anordnung des Gasgenerators 2 symbolisiert.

Das anhand der Figuren 1 bis 3 beschriebene Modulgehäuse 3 kann auch zu Aufnahme eines Gassackes verwendet werden, wenn der Gasgenerator 2 nicht an dem Gehäuse selbst sondern an anderer Stelle im Kraftfahrzeug angeordnet wird. In diesem Fall verläuft von dem Gasgenerator 1 zu dem Gehäuse 3 eine gasdichte Zuleitung zur Zuführung von Gas zu dem Gasgenerator. 1. Die Halterungen 35, 38 am Gehäuse 3 wären dann so zu modifizieren, dass sie zur Festlegung der Zuleitung dienen.

## Patentansprüche

1. Airbagmodul für ein Kraftfahrzeug mit
- einem Gassack,
- einem Gasgenerator zum Aufblasen des Gassackes und
- einem Gehäuse zur Aufnahme des Gasgenerators und des Gassackes,
**dass** wobei der Gassack (1) einerseits und der Gasgenerator (2) andererseits ausschließlich auf gegenüberliegenden Seiten (30a, 30b) einer Wand (30) des Gehäuses (3) angeordnet sind,
und dass auf der Seite (30a) der Wand (30), auf der der Gassack (1) angeordnet ist, ein Diffusor (45) vorgesehen ist, durch den hindurch aus dem Gasgenerator (2) ausströmendes Gas in den Gassack (1) eingeleitet werden kann, **dadurch gekennzeichnet,** der Diffusor (45) über einer Öffnung (33) in der Wand (30) vorgesehen ist, durch die hindurch aus dem Gasgenerator (2) ausströmende Gase in den Diffusor (45) gelangen können.

2. Airbagmodul nach Anspruch 1, **dadurch gekennzeichnet, dass** auf der Seite (30a) der Wand (30), auf der der Gassack (1) angeordnet ist, eine Halteplatte (4) befestigt ist und dass der Gassack (1) zwischen der Wand (30) und der Halteplatte (4) eingeklemmt ist.

3. Airbagmodul nach Anspruch 2, **dadurch gekennzeichnet, dass** die Halteplatte (4) als Halteblech ausgebildet ist.

4. Airbagmodul nach Anspruch 2 oder 3, **dadurch gekennzeichnet, dass** der Gassack (1) am Rand (15) seines Einblasmundes zwischen der Halteplatte (4) und der Wand (30) eingespannt ist.

5. Airbagmodul nach Anspruch 2, **dadurch gekennzeichnet, dass** der Diffusor (45) einstückig an der Halteplatte (4) angeformt ist.

6. Airbagmodul nach einem der vorhergehenden Ansprüche, **dadurch gekennzeichnet, dass** im gefalteten Zustand des in dem Gehäuse (3) verstauten Gassackes (1) nur eine Lage (10) des Gassackes (1) sich oberhalb einer in Strömungsrichtung (S) der Gase oberen Deckfläche (45a) des Diffusors (45) erstreckt.

7. Airbagmodul nach einem der Ansprüche 2 bis 6, **dadurch gekennzeichnet, dass** die Halteplatte (4) mittels Schrauben (47, 48) oder Rastelementen an der Wand (30) befestigt ist.

8. Airbagmodul nach einem der Ansprüche 2 bis 7, **dadurch gekennzeichnet, dass** an der Halteplatte (4) einstückig eine Ausformung (46) vorgesehen ist, die eine Öffnung in der Wand (30) durchgreift und zur Fixierung der Lage des Gasgenerators (2) dient.

9. Airbagmodul nach einem der Ansprüche 2 bis 8, **dadurch gekennzeichnet, dass** in der Halteplatte (4) und der Wand (30) miteinander korrespondierende Öffnungen (34, 44) zur Bildung einer Abströmöffnung für aus dem Gassack (1) entweichendes Gas vorgesehen sind.

10. Airbagmodul nach einem der vorhergehenden Ansprüche, **dadurch gekennzeichnet, dass** an der Wand (30) auf der zur Anordnung des Gassackes (1) vorgesehenen Seite (30a) eine Aufnahme für den Gassack (1) mit einer seitlichen Begrenzungswand (31) ausgebildet ist.

11. Airbagmodul nach einem der vorhergehenden Ansprüche, **dadurch gekennzeichnet, dass** an der Wand (30) auf der zur Aufnahme des Gasgenerators (2) vorgesehenen Seite (30b) eine von der Wand (30) abstehende Halterung (35) für den Gasgenerator (2) angeformt ist.

12. Airbagmodul nach einem der vorhergehenden Ansprüche, **dadurch gekennzeichnet, dass** der Gasgenerator (2) als Rohrgasgenerator ausgebildet ist.

13. Airbagmodul nach Anspruch 11 und 12, **dadurch gekennzeichnet, dass** der Gasgenerator (2) mit einem axialen Ende an der Halterung (35) festgelegt ist.

14. Airbagmodul nach einem der Ansprüche 11 bis 13, **dadurch gekennzeichnet, dass** die Halterung (35) zusammen mit dem Gehäuse (20, 21) des Gasgenerators (2) den Gasaustrittsbereich (22) des Gasgenerators (2) zur Bildung eines gasdichten Hohlraumes (H) umschließt, der eine Durchtrittsöffnung (33) aufweist, durch die hindurch Gas in den Gassack (1) strömen kann.

15. Airbagmodul nach Anspruch 14, **dadurch gekennzeichnet, dass** der Gasaustrittsbereich (22) an einem axialen Endabschnitt des Gasgenerators (2) vorgesehen ist.

16. Airbagmodul nach Anspruch 14 und 15, **dadurch gekennzeichnet, dass** der Hohlraum (H) nur den mit dem Gasaustrittsbereich (22) versehenen Endabschnitt des Gasgenerators (2) umgibt.

17. Airbagmodul nach einem der Ansprüche 11 bis 16, **dadurch gekennzeichnet, dass** an der Wand (30) auf der zur Aufnahme des Gasgenerators (2) vorgesehenen Seite (30b) mindestens eine weitere von der Wand (30) abstehende Halterung (38) für den Gasgenerator (2) angeformt ist.

18. Airbagmodul nach Anspruch 10 und 12, **dadurch gekennzeichnet, dass** die Ausdehnung der Aufnahme für den Gassack (1) in axialer Richtung (A) des Gasgenerators (2) und/oder senkrecht hierzu von der Ausdehnung des Gasgenerators (2) in der entsprechenden Richtung verschieden ist.

## Claims

1. Airbag module for a motor vehicle, having
- an airbag,
- a gas generator for inflating the airbag, and
- a housing for accommodating the gas generator and the airbag,
the airbag (1), on the one hand, and the gas generator (2), on the other hand, being arranged exclusively on opposite sides (30a, 30b) of a wall (30) of the housing (3),
and, on that side (30a) of the wall (30) on which the airbag (1) is arranged, a diffuser (45) being provided through which gas flowing out of the gas generator (2) can be conducted into the airbag (1), **characterized in that** the diffuser (45) is provided above an opening (33) in the wall (30), through which gases flowing out of the gas generator (2) can pass into the diffuser (45).

2. Airbag module according to Claim 1, **characterized in that** a retaining plate (4) is fastened on that side (30a) of the wall (30) on which the airbag (1) is arranged, and **in that** the airbag (1) is clamped between the wall (30) and the retaining plate (4).

3. Airbag module according to Claim 2, **characterized in that** the retaining plate (4) is designed as a metal retaining plate.

4. Airbag module according to Claim 2 or 3, **characterized in that** the airbag (1) is clamped at the edge (15) of its blow-in mouth between the retaining plate (4) and the wall (30).

5. Airbag module according to Claim 2, **characterized in that** the diffuser (45) is integrally formed on the retaining plate (4).

6. Airbag module according to one of the preceding claims, **characterized in that**, in the folded state of the airbag (1) stowed in the housing (3), only one layer (10) of the airbag (1) extends above an upper cover surface (45a) of the diffuser (45) in the direction of flow (S) of the gases.

7. Airbag module according to one of Claims 2 to 6, **characterized in that** the retaining plate (4) is fastened to the wall (30) by means of screws (47, 48) or latching elements.

8. Airbag module according to one of Claims 2 to 7, **characterized in that** a formation (46) which reaches through an opening in the wall (30) and serves for fixing the position of the gas generator (2) is provided integrally on the retaining plate (4).

9. Airbag module according to one of Claims 2 to 8, **characterized in that** openings (34, 44) which correspond with one another in the retaining plate (4) and the wall (30) are provided in order to form an outflow opening for gas escaping from the airbag (1).

10. Airbag module according to one of the preceding claims, **characterized in that** a retainer for the airbag (1) with a lateral boundary wall (31) is formed on the wall (30) on the side (30a) provided for the arrangement of the airbag (1).

11. Airbag module according to one of the preceding claims, **characterized in that** a mount (35) which protrudes from the wall (30) and is intended for the gas generator (2) is integrally formed on the wall (30) on the side (30b) provided for accommodating the gas generator (2).

12. Airbag module according to one of the preceding claims, **characterized in that** the gas generator (2) is designed as a tubular gas generator.

13. Airbag module according to Claims 11 and 12, **characterized in that** the gas generator (2) is fixed by one axial end to the mount (35).

14. Airbag module according to one of Claims 11 to 13, **characterized in that** the mount (35) together with the housing (20, 21) of the gas generator (2) encloses the gas outlet region (22) of the gas generator (2) in order to form a gas-tight cavity (H) which has a passage opening (33) through which gas can flow into the airbag (1).

15. Airbag module according to Claim 14, **characterized in that** the gas outlet region (22) is provided on an axial end section of the gas generator (2).

16. Airbag module according to Claims 14 and 15, **characterized in that** the cavity (H) surrounds only that end section of the gas generator (2) which is provided with the gas outlet region (22).

17. Airbag module according to one of Claims 11 to 16, **characterized in that** at least one further mount (38) which protrudes from the wall (30) and is intended for the gas generator (2) is integrally formed on the wall (30) on the side (30b) provided for accommodating the gas generator (2).

18. Airbag module according to Claims 10 and 12, **characterized in that** the extent of the retainer for the airbag (1) in the axial direction (A) of the gas generator (2) and/or perpendicularly thereto is different from the extent of the gas generator (2) in the corresponding direction.

## Revendications

1. Module d'airbag pour véhicule automobile, comportant
- un sac à gaz,
- un générateur de gaz pour gonfler le sac à gaz, et
- un boîtier pour recevoir le générateur de gaz et le sac à gaz,
dans lequel le sac à gaz (1) d'une part et le générateur de gaz (2) d'autre part sont agencés exclusivement sur des côtés opposés (30a, 30b) d'une paroi (30) du boîtier (3), et sur le côté (30a) de la paroi (30) sur lequel est agencé le sac à gaz (1) il est prévu un diffuseur (45) à travers lequel le gaz sortant du générateur de gaz (2) peut être introduit dans le sac à gaz (1),
**caractérisé en ce que** le diffuseur (45) est prévu au-dessus d'une ouverture (33) dans la paroi (30), à travers laquelle des gaz sortant du générateur de gaz (2) peuvent parvenir dans le diffuseur (45).

2. Module d'airbag selon la revendication 1, **caractérisé en ce qu'**une plaque de retenue (4) est fixée sur le côté (30a) de la paroi (30) sur lequel est agencé le sac à gaz (1), et **en ce que** le sac à gaz (1) est coincé entre la paroi (30) et la plaque de retenue (4).

3. Module d'airbag selon la revendication 2, **caractérisé en ce que** la plaque de retenue (4) est réalisée sous forme de tôle de retenue.

4. Module d'airbag selon la revendication 2 ou 3, **caractérisé en ce qu'**au bord (15) de son embouchure de gonflage le sac à gaz (1) est serré entre la plaque de retenue (4) et la paroi (30).

5. Module d'airbag selon la revendication 2, **caractérisé en ce que** le diffuseur (45) est moulé d'un seul tenant sur la plaque de retenue (4).

6. Module d'airbag selon l'une des revendications précédentes, **caractérisé en ce que** dans l'état plié du sac à gaz (1) rangé dans le boîtier (3), une seule couche (10) du sac à gaz (1) s'étend au-dessus d'une surface supérieure de couverture (45a) du diffuseur, laquelle s'étend dans la direction d'écoulement (S) des gaz.

7. Module d'airbag selon l'une des revendications 2 à 6, **caractérisé en ce que** la plaque de retenue (4) est fixée sur la paroi (30) au moyen de vis (47, 48) ou d'éléments d'enclenchement.

8. Module d'airbag selon l'une des revendications 2 à 7, **caractérisé en ce qu'**une conformation (46) est prévue d'un seul tenant sur la plaque de retenue (4), qui traverse une ouverture dans la paroi (30) et qui sert à fixer la position du générateur de gaz (2).

9. Module d'airbag selon l'une des revendications 2 à 8, **caractérisé en ce qu'**il est prévu dans la plaque de retenue (4) et dans la paroi (30) des ouvertures mutuellement correspondantes (34, 44) pour former une ouverture d'écoulement pour le gaz qui s'échappe hors du sac à gaz (1).

10. Module d'airbag selon l'une des revendications précédentes, **caractérisé en ce qu'**un logement pour le sac à gaz (1) comportant une paroi de limitation latérale (31) est ménagé sur la paroi (30) sur le côté (30a) prévu pour agencer le sac à gaz (1).

11. Module d'airbag selon l'une des revendications précédentes, **caractérisé en ce qu'**une monture (35) faisant saillie de la paroi (30) et destinée au générateur de gaz (2) est moulée sur la paroi (30) sur le côté (30b) prévu pour recevoir le générateur de gaz (2).

12. Module d'airbag selon l'une des revendications précédentes, **caractérisé en ce que** le générateur de gaz (2) est réalisé sous forme de générateur de gaz tubulaire.

13. Module d'airbag selon les revendications 11 et 12, **caractérisé en ce que** le générateur de gaz (2) est immobilisé par une extrémité axiale sur la monture (35).

14. Module d'airbag selon l'une des revendications 11 à 13, **caractérisé en ce que** la monture (35) entoure, conjointement avec le boîtier (20, 21) du générateur de gaz (2), la zone de sortie de gaz (22) du générateur de gaz (2) pour former une cavité (H) étanche aux gaz qui présente une ouverture de passage (33) à travers laquelle le gaz peut s'écouler jusque dans le sac à gaz (1).

15. Module d'airbag selon la revendication 14, **caractérisé en ce que** la zone de sortie de gaz (22) est prévue sur une portion d'extrémité axiale du générateur de gaz (2).

16. Module d'airbag selon les revendications 14 et 15, **caractérisé en ce que** la cavité (H) entoure uniquement la portion d'extrémité du générateur de gaz (2) qui est pourvue de la zone de sortie de gaz (22).

17. Module d'airbag selon l'une des revendications 11 à 16, **caractérisé en ce qu'**au moins une autre monture (38), faisant saillie de la paroi (30) et destinée au générateur de gaz (2), est moulée sur la paroi (30) sur le côté (30b) prévu pour recevoir le générateur de gaz (2).

18. Module d'airbag selon les revendications 10 et 12, **caractérise en ce que** l'extension du logement pour le sac à gaz (1) dans la direction axiale (A) du générateur de gaz (2) et/ou perpendiculairement à celle-ci est différente de l'extension du générateur de gaz (2) dans la direction correspondante.
